**Europäisches Patentamt**

**European Patent Office**

**Office européen des brevets**

(19)

(11) Veröffentlichungsnummer : **0 435 849 A1**

## (12) EUROPÄISCHE PATENTANMELDUNG

(21) Anmeldenummer : **90890347.9**

(22) Anmeldetag : **20.12.90**

(51) Int. Cl.$^5$ : **C22B 7/00, C22B 1/248**

(30) Priorität : **29.12.89 AT 2973/89**

(43) Veröffentlichungstag der Anmeldung :
**03.07.91 Patentblatt 91/27**

(84) Benannte Vertragsstaaten :
**CH DE FR GB IT LI SE**

(71) Anmelder : **VOEST-ALPINE STAHL Aktiengesellschaft**
**Turmstrasse 41**
**A-4020 Linz (AT)**

(72) Erfinder : **Nieder, Wolfgang, Dipl.-Ing.**
**Schrötterweg 12**
**A-4040 Linz (AT)**
Erfinder : **Kofler, Roland, Dipl.-Ing.**
**Holzörtlweg 2**
**A-4040 Linz (AT)**

(74) Vertreter : **Haffner, Thomas M., Dr. et al**
**Patentanwaltskanzlei Dipl.-Ing. Adolf Kretschmer Dr. Thomas M. Haffner**
**Schottengasse 3a**
**A-1014 Wien (AT)**

(54) **Verfahren zum Aufbereiten von Autowracks.**

(57)  Bei einem Verfahren zum Aufbereiten von Autowracks, bei welchem die Karosserieteile nach Abtrennung von Cu-hältigen Aggregaten und gegebenenfalls zumindest teilweisem Ausbau von Kunststoffteilen und Gummiteilen, wie z.B. Reifen, zu Paketen verpreßt und einem Schrotteinschmelzprozeß zugeführt werden, werden die Preßpakete vor der Aufgabe in den Schrotteinschmelzprozeß einer Schneideinrichtung zugeführt, wobei die Schnittrichtung der durchgeführten Schnitte zumindest teilweise von einer zu den Außenflächen des Preßpaketes parallelen Lage abweichend geführt ist.

FIG. 1

EP 0 435 849 A1

## VERFAHREN ZUM AUFBEREITEN VON AUTOWRACKS

Die Erfindung bezieht sich auf ein Verfahren zum Aufbereiten von Autowracks, bei welchem die Karosserieteile nach Abtrennung von Cu-hältigen Aggregaten und gegebenenfalls zumindest teilweisem Ausbau von Kunststoffteilen und Gummiteilen, wie z.B. Reifen, zu Paketen verpreßt und einem Schrotteinschmelzprozeß zugeführt werden.

Für die Aufbereitung von Autowracks ist es bekannt, diejenigen Bestandteile, welche relativ leicht demontierbar sind und einer gesonderten Aufarbeitung zum Zwecke der Erzielung höherwertiger Aufarbeitungsendprodukte zugeführt werden können, vor dem Verpressen zu einem Schrottpaket auszubauen. Eine weitverbreitete Art der Trennung von Bestandteilen besteht hiebei darin, daß Autowracks in großen Zerkleinerungsanlagen, insbesondere Shreddermühlen, in einer Weise zerkleinert werden, welche die Aussonderung von Eisenfraktionen, Nicht-Eisenfraktionen und sogenanntem Shreddermüll als dritte Fraktion erleichtert. Der Betrieb derartiger Shredderanlagen ist jedoch relativ kostenintensiv und erfordert hohe anlagentechnische Investitionen. Darüberhinaus entstehen bedeutende Fraktionen an Shreddermüll, welche für sich gesehen wiederum relativ inhomogen sind und zu aufwendigen nachfolgenden Entsorgungsschritten führen müssen. Shreddermüll wird mit Rücksicht auf die mit seiner Aufarbeitung verbundenen Schwierigkeiten häufig deponiert, wodurch wiederum eine hohe Umweltbelastung entsteht.

Der unmittelbare Einsatz von zu Paketen verpreßten Fahrzeugwracks stellt insofern eine Reihe von Problemen dar, da die geometrischen Formen, zu welchen derartige Wracks verpreßt werden, relativ großvolumige Würfel darstellen, welche sich nicht ohne weiteres als Aufgabematerial für ein Einschmelzaggregat eignen. Insbesondere wenn derartige Pressen ohne die im Anschluß an Shredderanlagen vorgesehenen Separationsschritte das ursprüngliche Material kompaktieren, enthält ein derartiges Preßpaket eine Reihe von Schadstoffen in unregelmäßiger Verteilung über die räumliche Tiefe des Würfels und beim nachfolgenden Einschmelzvorgang werden diese Schadstoffe im Inneren des noch nicht aufgeschmolzenen Preßpaketes relativ lange Zeit zurückgehalten. Ein Abzug von Schadstoffen aus derartigen Preßpaketen wird auf diese Weise wesentlich behindert und es ist in der Regel zu befürchten, daß eine Reihe von unerwünschten Schadstoffen in das Schmelzbad gelangt oder eine hinreichend lange Reaktionszeit bei entsprechend hohen Reaktionstemperaturen vorfindet, welches die Ausbildung unerwünschter, weiterer schwer zersetzlicher Schadstoffe zur Folge hat. Die unmittelbare Aufgabe von zu Paketen verpreßten Autowracks in ein Einschmelzaggregat wäre sicherlich von der Kostenseite her der wesentlich günstigere und billigere Weg. Mit Rücksicht auf die Schwierigkeiten der Entsorgung von Schadstoffen aus derartigen Würfeln und mit Rücksicht auf die ungünstige Packungsdichte derartiger würfelförmiger Preßpakete in einem Einschmelzvergaser lassen sich jedoch befriedigende Einschmelzergebnisse und insbesondere ein befriedigendes Metallbad mit vertretbarer Qualität nicht ohne weiteres erzielen.

Die Erfindung zielt nun darauf ab, ein Verfahren der eingangs genannten Art zu schaffen, bei welchem ohne die apparativ aufwendige Einrichtung einer Shreddermühle eine Aufarbeitung von Autowracks gelingt, und bei welchem die entstehenden Schadstoffe leichter und sicherer entsorgt werden können. Zur Lösung dieser Aufgabe besteht die erfindungsgemäße Verfahrensweise im wesentlichen darin, daß die Preßpakete vor der Aufgabe in den Schrotteinschmelzprozeß einer Schneideinrichtung zugeführt werden, wobei die Schnittrichtung der durchgeführten Schnitte zumindest teilweise von einer zu den Außenflächen des Preßpaketes parallelen Lage abweichend geführt ist. Dadurch, daß die Preßpakete vor der Aufgabe in den Schrotteinschmelzprozeß einer Schneideinrichtung zugeführt werden, können die Pakete in wesentlich kostengünstigerer Weise zu kleineren Einheiten zerschnitten werden, welche in der Folge bei der Aufgabe eine hinreichende Gasdurchlässigkeit ermöglichen. Um eine derartige Gasdurchlässigkeit für den Abzug der über die Gasphase abtrennbaren Verunreinigungen sicherzustellen, wird hiebei erfindungsgemäß die Schnittrichtung der durchgeführten Schnitte in einer Weise gelegt, welche die Ausbildung entsprechender Hohlräume nach dem Aufgeben in das Schrotteinschmelzgefäß sicherstellt. Die Schnitte werden daher zumindest teilweise von einer zu den Außenflächen des Preßpaketes parallelen Lage abweichend geführt, wodurch eine neuerliche Orientierung unter neuerlicher Einnahme einer hohen Packungsdichte behindert wird. Bei der Aufgabe derartiger geschnittener Produkte wird gleichzeitig eine maximale Schichtdicke der einzelnen Schneidprodukte gewährleistet, welche die Diffusion von Schadstoffen über die nunmehr geringere Materialstärke begünstigt, und durch die Maßnahme, daß zwischen benachbarten Schneidprodukten Kanäle ausgebildet werden, können die Schadstoffe leichter über die Gasphase ausgetragen werden.

Durch den Umstand, daß Shreddermüll bei der erfindungsgemäßen Verfahrensweise vermieden wird, wird ein relativ hohes Volumen an Sondermüll vermieden und es wird insbesondere verhindert, daß bei der üblichen Deponie von Shreddermüll gefährliche Auslaugungsprodukte, wie polychlorierte Biphenyle und Öle, die zur Klassifizierung als Sondermülls führen, in den Boden freigesetzt werden. Die Shreddermülldeponiekosten sind ein wesentlicher Kostenfakor beim Betrieb einer Shreddermühle und die Aufarbeitung von Shreddermüll in Verbrennungsanlagen erfordert mindestens ebenso umfangreiche Sicherheitsmaßnahmen wie der unmittelbare Einsatz eines gegebenenfalls nach Entfernen von Reifen, Lichtmaschinen od.dgl., zu einem Paket verpreßten Autowracks als Einsatzstoff in einen Einschmelzprozeß. Im übrigen sind auch die in Shredderanlagen anfallenden Eisen- und Nicht-Eisenschrottfraktionen in der Regel durch chlorhältige Kunststoffanhaftungen verunreinigt, so daß beim Wiederaufbereiten in Einschmelzanlagen Dioxine entstehen können, die entsprechende Maßnahmen zur Beseitigung, insbesondere entsprechende Filteranlagen, erfordern. Wenn unter Verwendung von Shredderanlagen Zink, Blei und Stahl voneinander getrennt werden sollen, ist hiefür eine besonders teure, intensive Zerkleinerung und Sortierung notwendig, um überhaupt zu recyclingfähigen Fraktionen zu gelangen. Durch den Einsatz von mehr und mehr verzinkten Stahlsorten im Automobilbau kann Zink beim Schrottschmelzverfahren unmittelbar über die Gasphase abgetrennt werden, wobei lediglich für eine entsprechend rasche Zirkulation der Zinkdämpfe Sorge getragen werden muß, was durch die erfindungsgemäße Zerkleinerung der Preßpakete gewährleistet ist.

Die beim Einschmelzen der zerkleinerten Preßpakete entstehenden Prozeßgase können in nachgeschalteten Hochtemperaturverbrennungskammern verbrannt werden, wodurch der Kohlenwasserstoffgehalt minimiert werden kann, wobei der Einschmelzprozeß kontinuierlich geführt werden kann und abschmelzendes Schrottmetall mit der durch die Eisenoxidation, Verschlackung der sauerstoffaffinen Begleitelemente und Schrottverunreinigungen, sowie chargierten Zuschlägen gebildeten Schlacke durch Seitenabstiche zur weiteren Behandlung in Auffangpfannen geleitet werden kann.

Eine Vorselektierung von Zink, Blei, Kupfer od.dgl., ist insbesondere in bezug auf Blei und Kupfer sicherlich wünschenswert und in der Regel mit mehr oder minder großer Ausbeute möglich. Für die Abtrennung von Blei ist es in der Regel ausreichend, Autobatterien auszubauen. Bei der Abtrennung von Kupfer ist die mögliche Ausbeute bei einer selektiven Demontage begrenzt. An kupferhältigen Materialien sind in Autowracks neben der Lichtmaschine und dem Kühler vor allen Dingen die Kabelbäume zu nennen, welche darüberhinaus auf Grund der Kunststoffe, welche zu Isolationszwecken eingesetzt werden, beim Verbrennen relativ leicht gefährliche Substanzen freisetzen. Derartige Kabelbäume können in der Regel nicht vollständig entfernt werden, so daß ein Restgehalt an Kupfer im Schmelzbad auch bei selektiven Ausbaumaßnahmen nicht ohne weiteres vermieden werden kann. Die Vorabtrennung bzw. selektive Abtrennung von Zink vor dem Einschmelzprozeß ist von vornherein zum Scheitern verurteilt, da Zink in größeren Mengen in Form einer Verzinkung bzw. Korrosionsschutzschicht auf Stahlblechteilen aufgetragen ist und daher in dieser Form nicht ohne weiteres abgetrennt werden kann.

Die mit den Preßpaketen in den Einschmelzprozeß eingebrachten Zink- und Bleianteile können in nachgeschalteten Filtern auf Anteile von höher als 30% angereichert werden, wodurch sich unmittelbar ein Produkt ergibt, welches die weitere Aufarbeitung in wirtschaftlicher Weise ermöglicht. Dadurch, daß mit den zu Paketen verpreßten Autowracks auch Energieinhalte, welche bei Shredderanlagen üblicherweise im Shreddermüll verbleiben, in den Einschmelzprozeß eingebracht werden, kann insgesamt eine Verringerung des zusätzlichen Energieaufwandes, beispielsweise der Erdgasmenge, erzielt werden.

In besonders vorteilhafter Weise wird das erfindungsgemäße Verfahren so durchgeführt, daß die Preßpakete zu Platten mit über ihre Fläche unterschiedlicher Stärke geschnitten werden, wodurch die Ausbildung durchgehender Kanäle für den Abtransport von gasförmigen Zersetzungsprodukten begünstigt wird. Die sichere Aufrechterhaltung derartiger Abzugskanäle kann auch dadurch verbessert werden, daß die zu Platten geschnittenen Preßpakete vor der Aufgabe in den Schrotteinschmelzprozeß einer Biegeverformung unterworfen werden, wobei derartige Biegeverformungen in besonders einfacher Weise als Warmverformungen unter gleichzeitiger Entchlorung vorgenommen werden können. Mit besonderem Vorteil wird daher die Verformung der zu Platten geschnittenen Preßpakete unter Vorwärmung und Entchlorungsbedingungen durchgeführt, wodurch gleichzeitig eine Vorwärmung des Preßpaketes erzielt werden kann. Eine Vorwärmung von unzerschnittenen Preßpaketen ist nicht zuletzt deshalb nicht ohne weiteres möglich, da dies mit einem hohen Energieverbrauch und nur geringer Erwärmung im Inneren der Preßpakete verbunden wäre.

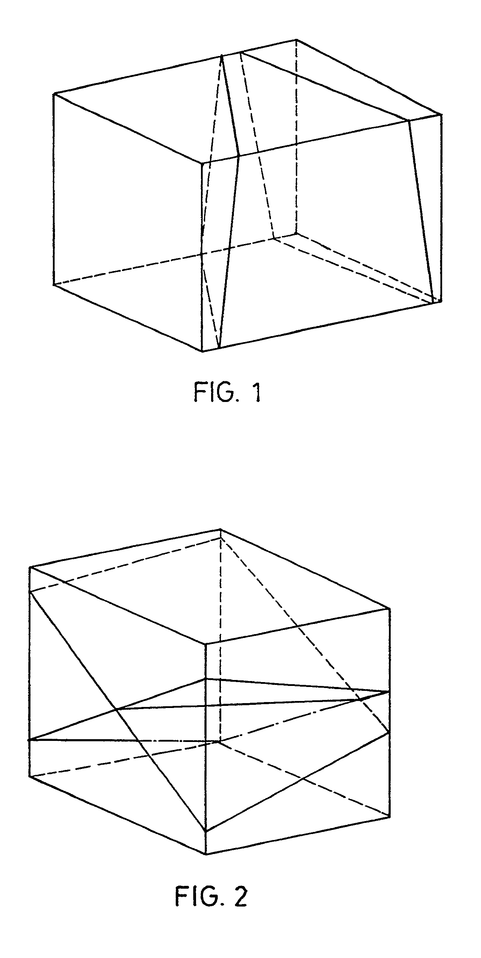

Die Erfindung wird nachfolgend an Hand von Ausführungsbeispielen näher erläutert. In den Fig. 1 und 2 sind mögliche Schnittführungen zur Durchführung des erfindungsgemäßen Verfahrens dargestellt.

Beispiel 1 :

Ein quaderförmiger Preßling mit den Maßen 500 × 500 × 1200 mm aus einer Schrottpresse wird mit Hilfe einer Fördereinrichtung zu einer Schneidanlage gebracht und durch Neigen der Schneidebenen wie in Abb.1 dargestellt, in unregelmäßige Körper zerschnitten. Die zwischen den Achsen des ursprünglichen Preßlings und der Schneidfläche gebildeten Winkel sind für beide Schneidflächen nicht gleich.

<u>Beispiel 2 :</u>

Ein würfelförmiger Preßling mit den Maßen 700 × 700 × 700 mm aus einer Schrottpresse wird durch eine Schneidvorrichtung wie in Abb.2 gezeigt, in vier unregelmäßige Preßkörper zerteilt. Alle durch den Schneidvorgang neu gebildeten Winkel sind von 90° abweichend.

Die Ausmauerung der für das Einschmelzen bzw. thermischen Vorbehandeln der Preßkörper verwendeten Einrichtung besteht aufgrund des hohen Zinkanteiles im Schrott aus hochtonerdehaltigen Massen aus Zirkon oder Chrom-Magnesit-Steinen.

**Patentansprüche**

1. Verfahren zum Aufbereiten von Autowracks, bei welchem die Karosserieteile nach Abtrennung von Cu-hältigen Aggregaten und gegebenenfalls zumindest teilweisem Ausbau von Kunststoffteilen und Gummiteilen, wie z.B. Reifen, zu Paketen verpreßt und einem Schrotteinschmelzprozeß zugeführt werden, dadurch gekennzeichnet, daß die Preßpakete vor der Aufgabe in den Schrotteinschmelzprozeß einer Schneideinrichtung zugeführt werden, wobei die Schnittrichtung der durchgeführten Schnitte zumindest teilweise von einer zu den Außenflächen des Preßpaketes parallelen Lage abweichend geführt ist.

2. Verfahren nach Anspruch 1, dadurch gekennzeichnet, daß die Preßpakete zu Platten mit über ihre Fläche unterschiedlicher Stärke geschnitten werden.

3. Verfahren nach Anspruch 1 oder 2, dadurch gekennzeichnet, daß die zu Platten geschnittenen Preßpakete vor der Aufgabe in den Schrotteinschmelzprozeß einer Biegeverformung unterworfen werden.

4. Verfahren nach Anspruch 1, 2 oder 3, dadurch gekennzeichnet, daß die Verformung der zu Platten geschnittenen Preßpakete unter Vorwärmung und Entchlorungsbedingungen durchgeführt wird.

FIG. 1

FIG. 2

Europäisches
Patentamt

**EUROPÄISCHER RECHERCHENBERICHT**

Nummer der Anmeldung

EP 90 89 0347

| | EINSCHLÄGIGE DOKUMENTE | | |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
| X | US-A-3 320 051 (C. LIEBERMAN)<br>* Anspruch 1 *<br>--- | 1 | C 22 B 7/00<br>C 22 B 1/248 |
| A | US-A-3 180 249 (G.C. PATROS)<br>* Figur *<br>--- | 1 | |
| A | US-A-3 681 048 (A. OTANI)<br>* Spalte 1, Zeilen 49-52 *<br>----- | 1 | |
| | | | **RECHERCHIERTE SACHGEBIETE (Int. Cl.5)**<br><br>C 22 B |

Der vorliegende Recherchenbericht wurde für alle Patentansprüche erstellt

| Recherchenort | Abschlußdatum der Recherche | Prüfer |
|---|---|---|
| BERLIN | 26-03-1991 | SUTOR W |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
......................................................................
& : Mitglied der gleichen Patentfamilie, übereinstimmendes Dokument

EPO FORM 1503 03.82 (P0403)